# EUROPÄISCHE PATENTSCHRIFT

(11) **EP 1 395 520 B1**
(45) Veröffentlichungstag und Bekanntmachung des Hinweises auf die Patenterteilung: **26.07.2006**
(21) Anmeldenummer: 02710789.5
(22) Anmeldetag: 10.01.2002
(51) Int. Cl.: C02F 1/32

(54) **UV-BESTRAHLUNGSVORRICHTUNG FÜR DIE BEHANDLUNG VON FLUIDEN MIT EINER VERBESSERTEN REINIGUNGSVORRICHTUNG**
UV-IRRADIATION DEVICE FOR TREATING FLUIDS, COMPRISING AN IMPROVED CLEANING DEVICE
DISPOSITIF D'IRRADIATION UV CON U POUR LE TRAITEMENT DE FLUIDES ET COMPORTANT UN DISPOSITIF DE NETTOYAGE AMELIORE

(30) Priorität: 23.05.2001 DE 10125507
(43) Veröffentlichungstag der Anmeldung: 10.03.2004
(73) Patentinhaber: WEDECO AG Water Technology, 40472 Düsseldorf (DE)
(72) Erfinder: MENKE, Gerhard, 32584 Löhne (DE)
(74) Vertreter: LENZING GERBER
(86) Internationale Anmeldenummer: PCT/EP2002/000177
(87) Internationale Veröffentlichungsnummer: WO 2002/094721

(56) Entgegenhaltungen:
- CH-A- 446 207
- US-A- 3 182 191
- US-A- 4 367 410
- US-A- 5 401 474
- US-A- 5 528 044

## Beschreibung

Die vorliegende Erfindung betrifft eine UV-Bestrahlungsvorrichtung mit den Merkmalen des Oberbegriffs des Anspruchs 1.

Eine derartige Vorrichtung ist aus der US-Patentschrift 5,874,740 bekannt.

Mikrobiologisch verunreinigte Flüssigkeiten wie z. B. Abwässer aus Kläranlagen werden besonders umweltschonend desinfiziert, indem sie mit ultravioletter Strahlung behandelt werden. Zu diesem Zwecke sind verschiedene Bestrahlungsvorrichtungen aus dem Stand der Technik bekannt. Es ergibt sich bei zahlreichen Anwendungsfällen das Problem, dass die Lampeneinheiten der Bestrahlungsvorrichtungen von außen verschmutzen.

In der obengenannten Patentschrift wird deshalb eine vorrichtung vorgeschlagen, bei der ringförmige Kammern die Lampeneinheiten umgeben. Die Kammern liegen an der Oberfläche der Hüllrohre an und sind dort mit zwei O-Ringen abgedichtet. Das Innere der Kammern wird über eine Versorgungseinrichtung mit einer Reinigungsflüssigkeit, beispielsweise Phosphorsäure, gefüllt. Zur Reinigung der Oberfläche der Lampeneinheit wird nun die mit Reinigungsflüssigkeit gefüllte Kammer auf der Oberfläche hin und her bewegt, wodurch lose haftende Verunreinigungen weggeschoben werden sollen und zum anderen fest haftende Beläge mittels Reinigungsflüssigkeit gelöst werden sollen.

In der Praxis funktioniert diese Vorrichtung nur eingeschränkt, da die O-Ring-Dichtungen der Kammer zu der Hüllrohroberfläche hin sehr sensibel auf mechanische Beschädigungen oder Maßabweichungen reagieren und darüber hinaus die chemische Wirkung der Reinigungsflüssigkeit an der Hüllrohroberfläche ohne mechanische Unterstützung nicht ausreicht, um die Bildung von Belägen zu verhindern oder diese zu entfernen. Die Einwirkzeiten sind hierfür zu kurz. Für mechanisch entfernbare Beläge wird diese Vorrichtung als zu aufwendig angesehen. Die O-Ringe selbst haben keine wesentliche Reinigungswirkung, da sie zum einen aufgrund ihres kreisrunden Querschnitts einen sehr spitzen Kontaktwinkel mit dem Hüllrohr bilden und zum anderen bei fest haftenden oder abrasiven Anhaftungen dazu neigen, über diese hinweg zu rollen.

Rein mechanisch arbeitende Reinigungsvorrichtungen sind ebenfalls bekannt, beispielsweise aus der WO98/27011. Dort wird ein Reinigungsring über die Oberfläche des Hüllrohres bewegt, um lose anhaftende Verunreinigungen zu entfernen. Bei fester haftenden Verunreinigungen ist die Wirkung dieser Reinigungsvorrichtung beschränkt.

Dies gilt auch für Reinigungsvorrichtungen, die aus der US-Patentschrift 4,367,410 bekannt sind. Hier werden Reinigungsringe mit T-förmigem Querschnitt von äußeren Halteringen gefasst und über das Hüllrohr geführt.

Die Reinigungsvorrichtung nach der US-Patentschrift 3,182,191 weist einen Reinigungsring mit nahezu quadratischem Querschnitt auf, der eng in einer Nut des Halterings geführt ist.

Eine Reinigungsvorrichtung für die Innenseite von durchströmten UV-Reaktorrohren zeigt die US-Patentschrift 5,401,474. Die Reinigungsringe haben eine schmale Kontaktfläche und einen in Radialrichtung großen Radius, so dass sie aufrecht auf der Oberfläche des Hüllrohres stehen.

Es ist deshalb Aufgabe der vorliegenden Erfindung, eine UV-Bestrahlungsvorrichtung zu schaffen, die eine wirksame, ohne Zufuhr von Chemikalien arbeitende Reinigungsvorrichtung aufweist.

Diese Aufgabe wird von einer Vorrichtung mit den Merkmalen des Anspruchs 1 gelöst.

Weil die Reinigungselemente in Längsrichtung des Hüllrohrs neben den Stirnseiten des Rings angeordnete Stützmittel, insbesondere Kunststoff- oder Metallscheiben aufweisen, die einer Verformung des Rings bei Betätigung der Reinigungselemente entgegenwirken, wird ein Ausweichen des Rings gegenüber auf der Oberfläche anhaftenden Verschmutzungen verhindert. Die Reinigungswirkung wird dadurch verbessert. Das Material wird mit einer Vorspannung an die Oberfläche gedrängt und ist bei Verschleiß selbst nachstellend. Diese Vorrichtung kann der Ausbildung von Belägen auf der Hüllrohroberfläche wirkungsvoll entgegenwirken und diese verhindern, auch bei hohem Gehalt von Erdalkalien in dem zu behandelnden Wasser oder Abwasser.

Wenn das Material ein Fluoroelastomer ist, beispielsweise das unter der Bezeichnung VITON von der Firma DuPont Dow Elastomers angebotene Material, ist der Ring sowohl unempfindlich gegenüber Hitze, Oxydation, Ozoneinwirkung und ultraviolette Strahlung. Er ist außerdem mechanisch sehr dauerhaft.

Der Ring weist vorzugsweise einen rechteckigen Querschnitt auf, beispielsweise mit einer Materialstärke von etwa 1 mm und einer Breite von 10 mm oder mehr. Bei diesen Abmessungen ist die flächenspezifische Anpresskraft aufgrund der Vorspannung besonders gut.

Die Stützmittel können insbesondere jeweils schraubenförmig gewendelt sein, wobei das Material der Stützmittel einen flachen rechteckigen Querschnitt aufweist und der Innendurchmesser des Stützmittels im entspannten Zustand kleiner oder gleich dem Außendurchmesser des Hüllrohrs ist und jeweils wenigstens zwei Schraubengänge bei jedem Stützmittel vorgesehen sind. Derartig konfigurierte Stützmittel haben sich in der Praxis sowohl zur Abstützung des gummielastischen Rings als auch zur Abstreifung von groben Verunreinigungen bewährt, die dem gummielastischen Ring allein einen zu großen Widerstand entgegensetzen würden.

Die Stützmittel können dabei im wesentlichen unelastisch aus einem halogenierten Kohlenwasserstoffmaterial gefertigt sein. Insbesondere sind Stützmittel aus PTFE (Polytetrafluorethylen) von Vorteil.

Der in dem Reinigungselement vorgesehene Raum ist vorzugsweise eine von der Innenseite des Reinigungselements der eingestochenen Nut mit rechteckigem Querschnitt, in die eine Packung aus Stützmittel, Ring und weiterem Stützmittel einliegt. Es können auch mehrere Ringe oder mehrere Stützmittel vorgesehen sein. Die Packung weist in der Nut vorzugsweise ein Axialspiel von 0 mm bis 2 mm auf. In Radialrichtung soll die Packung ein Radialspiel von 2 mm bis 8 mm, insbesondere etwa 5 mm in der Nut aufweisen.

Der Ring aus gummielastischem Material ist vorzugsweise mit einer Dicke von 0,5 mm bis 2 mm, insbesondere 0,8 mm versehen. Das Material des Rings weist in Radialrichtung vorzugsweise eine Erstreckung von 5 mm bis 15 mm, insbesondere etwa 11 mm auf.

Im folgenden werden Ausführungsbeispielen der vorliegenden Erfindung anhand der Zeichnungen beschrieben. Es zeigen:
- Figur 1:: Eine Draufsicht auf ein Reinigungselement einer erfindungsgemäßen UV-Bestrahlungsvorrichtung in Radialrichtung;
- Figur 2:: einen Querschnitt entlang der Mittenachse durch das Reinigungselement gemäß Figur 1;
- Figur 3:: eine perspektivische Darstellung eines Reinigungselements ohne die eingelegten Stützelemente und den eingelegten Ring;
- Figur 4:: den Ring des Reinigungselements gemäß Figur 2 in einer axialen Draufsicht; sowie
- Figur 5:: den Ring gemäß Figur 4 in einer Ansicht in Radialrichtung.

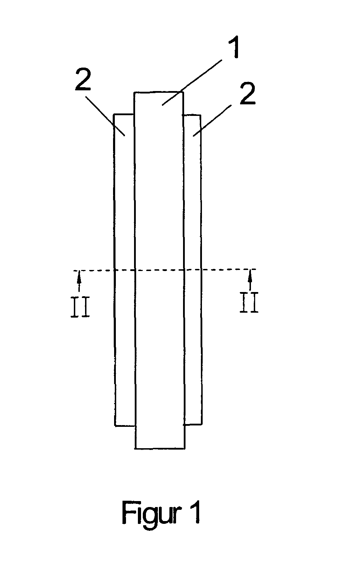

In der Figur 1 ist ein Reinigungselement einer erfindungsgemäßen UV-Bestrahlungsvorrichtung in einer Ansicht in Radialrichtung gezeigt. Das Reinigungselement ist im wesentlichen rotationssymmetrisch ausgebildet und weist einen mittigen Bereich 1 größeren Durchmessers auf, der in Axialrichtung zu beiden Seiten von je einem Führungsbereich 2 kleineren Außendurchmessers begrenzt wird.

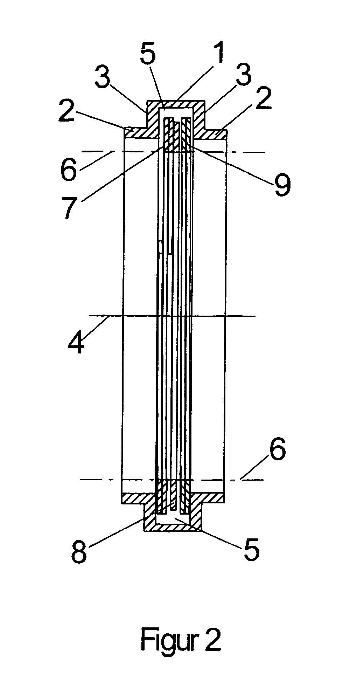

Einen Querschnitt entlang der Linie II-II aus Figur 1 zeigt die Figur 2.

Die Führungsbereiche 2 sind im wesentlichen rohrförmig ausgebildet und mit dem Bereich 1 einstückig, wobei sich radial erstreckende Stirnseiten 3 den Übergang zwischen den Führungsabschnitten 2 und dem Bereich 1 bilden.

Die Stirnseiten 3 und die Umfangsfläche des Bereichs 1 begrenzen zwischen sich eine zu einer Achse 4 hin offene Nut 5 mit nahezu quadratischem Querschnitt. Mit der Bezugsziffer 6 ist die äußere Mantellinie eines Hüllrohres angedeutet, das im Betrieb das Reinigungselement trägt.

In der Nut 5 wiederum liegt ein Paket aus einem Stützelement 7, einem Ring 8 und einem weiteren Stützelement 9 ein.

Die Stützelemente 7 und 9 sind im wesentlichen baugleich. Sie werden von einem bandförmigen, schraubenförmig gewendelten Material gebildet, das einen flachen, rechteckigen Querschnitt aufweist und das in Form einer etwa zweigängigen Schraube um die Achse 4 gewendelt ist. Die Schraubengänge liegen dabei aneinander an. Die Erstreckung des Materials der Stützelemente 7 und 9 in Radialrichtung ist etwa fünfmal so groß wie die Dicke. Im entspannten Zustand liegt das jeweilige Stützelement mit einem Radialspiel in der Nut 5 ein.

Zwischen den beiden Stützelementen 7 und 9 ist der Ring 8 angeordnet. Der Ring 8 ist aus einem gummielastischen Material gebildet und weist ein Verhältnis zwischen der Breite b in Radialrichtung und der Dicke d in Axialrichtung von etwa 5:1 bis 6:1 auf.

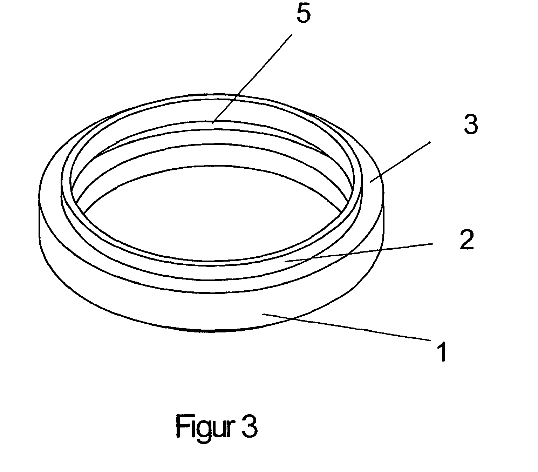

Die Figur 3 zeigt den Grundkörper des Reinigungselements gemäß Figur 1 und Figur 2 in einer perspektivischen Darstellung ohne das einliegende Paket aus Stützelementen 7,9 und dem Ring 8.

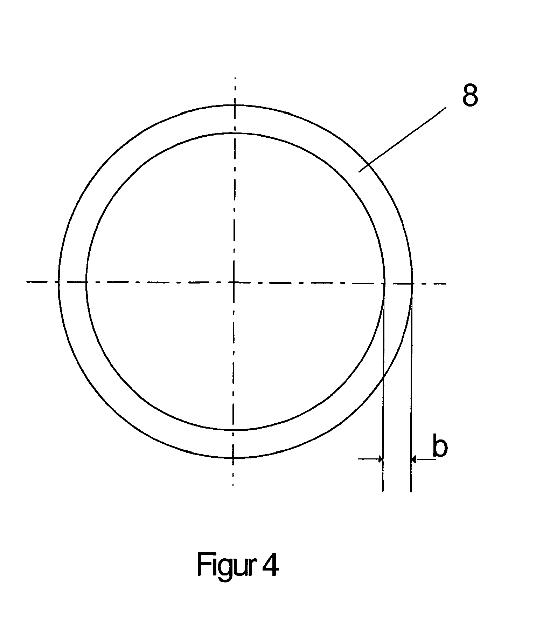

Die Figur 4 zeigt den Ring 8 in einer Draufsicht in Richtung der Achse 4. Das Maß b der Materialbreite ist veranschaulicht.

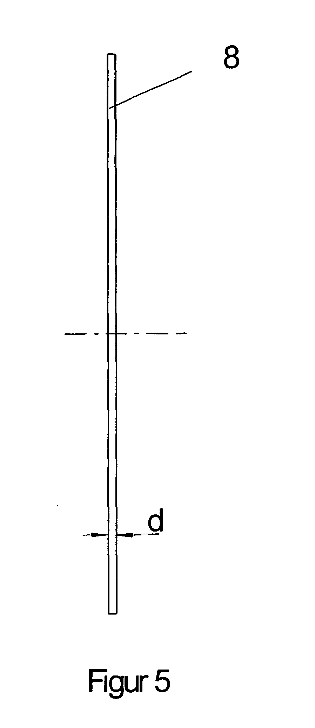

Die Figur 5 zeigt den Ring 8 gemäß Figur 4 in einer radialen Ansicht, in der das Maß d veranschaulicht wird.

Insgesamt ergibt sich ein Reinigungssystem von hoher Wirksamkeit und Zuverlässigkeit. Auch bei hartnäckigen oder schnell anwachsenden Belägen, wie sie bei Abwässern mit hohem Gehalt an Kalkbildnern zu erwarten sind, wird eine zuverlässige Reinigung der Oberflächen gewährleistet. Der Ring hat also die Konfiguration eines ebenen Kreisrings.

Bei diesem konkreten Ausführungsbeispiel wird die UV-Bestrahlungseinrichtung mit Hüllrohren 6 versehen, die einen Außendurchmesser von 48 mm aufweisen. Das Reinigungselement, genauer gesagt der in Figur 3 dargestellte Grundkörper, weist einen Innendurchmesser von 52 mm auf, so dass in Radialrichtung ein ausreichendes Spiel vorhanden ist: Die kastenförmige Nut 5 weist Abmessungen von 5,5 mm in Richtung der Achse 4 und 4,5 mm in Radialrichtung auf. Das Reinigungselement hat eine Erstreckung in Richtung der Achse 4 von insgesamt 15 mm. Es ist vorzugsweise aus PETP (Polyethylenterephthalat) gefertigt.

Die Stützelemente 7 und 9 werden bevorzugt aus PTFE (Polytetrafluorethylen) gefertigt und sind so bemessen, dass im kräftefreien Zustand, in dem die Reinigungsvorrichtung nicht auf ein Hüllrohr 6 aufgesetzt ist, der Innendurchmesser geringfügig kleiner ist als der Außendurchmesser der Hüllrohre 6, der im vorliegenden Ausführungsbeispiel bei etwa 47 mm Innendurchmesser liegt. Gleiches gilt für den Ring 8. Dieser Ring weist einen Innendurchmesser von 47,2 mm auf, während die Dicke 0,8 mm und die Breite des Materials 5 mm beträgt. Als Material wird ein Fluoroelastomer bevorzugt, beispielsweise das unter der Marke VITON angebotene Polymerisat aus Vinylfluorid und Hexafluorpropylen.

Im Betrieb wird das Reinigungselement wie in der Figur 2 dargestellt über das Hüllrohr 6 gestreift. Es wird beidseits der Stirnseiten 3 von einem gabelförmigen Antriebselement erfasst und von einer Steuerung zeitabhängig oder nach sonstigen Kriterien regelmäßig über die gesamte Oberfläche des Hüllrohres bewegt. Dabei kann sich die Packung aus den Stützelementen 7 und 9 und dem Ring 8 dem Verlauf des Hüllrohres 6 anpassen. Die Stützelemente 7 und 9 können Schwankungen des Durchmessers aufnehmen, indem sich der von ihnen beschriebene Schraubenwendel mehr oder weniger aufweitet. Dies ist auch bei der Wahl von PTFE als Material möglich, das an sich nicht elastisch ist. Der Ring 8 ist gummielastisch und kann deshalb ebenfalls der Oberflächenkontur des Hüllrohres 6 folgen. Der Grundkörper des Reinigungselements führt die Packung 7, 8, 9 nur in Richtung der Achse 4. In Radialrichtung ist die Packung im Rahmen des Radialspiels innerhalb der Nut frei beweglich.

Bei der Reinigungsbewegung bewirken die Stützelemente 7, 9, dass der Ring 8 sich nicht verwindet, was aufgrund der Reibung auf der Oberfläche des Hüllrohres 6 ohne die Stützelemente 7, 9 zu befürchten wäre. Eine geringe Verformung des Rings 8 kann aber vorteilhaft sein, weil sie zu einer Ausbildung einer Abstreifkante gegenüber dem Hüllrohr führt. Die Stützwirkung wird von dem geringen Axialspiel begünstigt. Die Querschnittsverhältnisse des Rings 8 bewirken zusammen mit den gummielastischen Eigenschaften eine Anpresskraft des Rings 8 an die Oberfläche des Hüllrohrs 6, was aufgrund der geringen Dicke des Rings 8 zu einer relativ großen Flächenpressung führt. Die Reinigung der Oberfläche des Hüllrohrs 6 durch das beschriebene Reinigungselement führt deshalb zu einem guten Ergebnis, was bei der erfindungsgemäßen UV-Bestrahlungsanlage wiederum zu einer verbesserten Betriebssicherheit und einer guten UV-Strahlungsausbeute über die Betriebsdauer führt.

Andere Ausführungsformen können vorsehen, dass mehrere Ringe 8 und/oder Stützelemente 7,9 verwendet werden. Materialien und Abmessungen können an andere Einsatzbedingungen angepasst werden.

## Patentansprüche

1. UV-Bestrahlungsvorrichtung für die Behandlung von Fluiden, insbesondere von Wasser oder Abwasser,
- mit einer Anzahl von Lampeneinheiten, die jeweils eine Strahlungsquelle und ein die Strahlungsquelle umgebendes Hüllrohr aufweisen, wobei die Lampeneinheiten im wesentlichen zylindrisch ausgebildet sind,
- mit einer Reinigungsvorrichtung , die die Hüllrohre (6) ringförmig umgebende Reinigungselemente (1) aufweist, wobei jedem Hüllrohr (6) wenigstens ein Reinigungselement (1) zugeordnet ist und die Reinigungselemente (1) von wenigstens einer Antriebseinheit in Längsrichtung der Hüllrohre (6) verschiebbar sind, wobei
- die Reinigungselemente einen axial begrenzten, ringförmige Raum (5) aufweisen, der zu der Oberfläche der Hüllrohre (6) hin offen ist, wobei in dem Raum (5) wenigstens ein Ring (8) aus einem gummielastischen Material mit unrundem Querschnitt einliegt, dessen Innendurchmesser im entspannten Zustand kleiner oder gleich dem Außendurchmesser des Hüllrohres (6) ist,
**dadurch gekennzeichnet, dass**
die Reinigungselemente (1) in Längsrichtung des Hüllrohrs (6) neben den Stirnseiten des Rings (8) angeordnete Stützmittel (7,9), insbesondere Kunststoff- oder Metallstützmittel aufweisen, die einer Verformung des Rings (8) bei Betätigung der Reinigungselemente (1) entgegenwirken.

2. UV-Bestrahlungsvorrichtung nach Anspruch 1, **dadurch gekennzeichnet, dass** das Material ein Fluoroelastomer ist.

3. UV-Bestrahlungsvorrichtung nach Anspruch 1, **dadurch gekennzeichnet, dass** der Ring (8) einen rechteckigen Querschnitt aufweist.

4. UV-Bestrahlungsvorrichtung nach einem der vorhergehenden Ansprüche, **dadurch gekennzeichnet, dass** die Stützmittel (7,9) jeweils schraubenförmig gewendelt sind, wobei
- das Material einen flachen rechteckigen Querschnitt aufweist;
- der Innendurchmesser des Stützmittels (7.9) im entspannten Zustand kleiner oder gleich dem Außendurchmesser des Hüllrohres (6) ist und
- jeweils wenigstens zwei Schraubengänge vorgesehen sind.

5. UV-Bestrahlungsvorrichtung nach einem der vorhergehenden Ansprüche, **dadurch gekennzeichnet, dass** die Stützmittel (7,9) aus einem halogenierten Kohlenwasserstoffmaterial gefertigt sind.

6. UV-Bestrahlungsvorrichtung nach einem der vorhergehenden Ansprüche, **dadurch gekennzeichnet, dass** der in dem Reinigungselement (1) vorgesehene Raum (5) eine von der Innenseite her eingestochene Nut (5) mit rechteckigem Querschnitt ist und dass in der Nut (5) eine Packung (7,8,9) aus einem Stützmittel (7), einem Ring (8) und einem weiteren Stützmittel (9) einliegt.

7. UV-Bestrahlungsvorrichtung nach einem der vorhergehenden Ansprüche, **dadurch gekennzeichnet, dass** die Packung (7, 8, 9) ein Axialspiel von 0 mm bis 2 mm in der Nut (5) aufweist.

8. UV-Bestrahlungsvorrichtung nach einem der vorhergehenden Ansprüche, **dadurch gekennzeichnet, dass** die Packung (7,8,9) ein Radialspiel von 2 mm bis 8 mm, insbesondere etwa 5 mm in der Nut (5) aufweist.

9. UV-Bestrahlungsvorrichtung nach einem der vorhergehenden Ansprüche, **dadurch gekennzeichnet, dass** der Ring (8) eine Dicke von 0,5 mm bis 2 mm, insbesondere 0,8 mm aufweist.

10. UV-Bestrahlungsvorrichtung nach einem der vorhergehenden Ansprüche**, dadurch gekennzeichnet, dass** das Material des Rings (8) eine radiale Breite von 5 mm bis 15 mm, insbesondere etwa 11 mm aufweist.

## Claims

1. UV irradiation device for the treatment of fluids, in particular water or waste water,
- having a number of lamp units which respectively comprise a radiation source and an envelope tube enclosing the radiation source, the lamp units essentially being designed cylindrically,
- having a cleaning device which comprises cleaning elements (1) annularly enclosing the envelope tubes (6), each envelope tube (6) being assigned at least one cleaning element (1) and the cleaning elements being displaceable in the longitudinal direction of the envelope tubes (6) by at least one drive unit,
- the cleaning elements comprising an axially limited annular space (5) which is open towards the surface of the envelope tube (6), at least one ring (8) of a rubber-elastic material with non-round cross section, the inner diameter of which in the relaxed state is less than or equal to the outer diameter of the envelope tube (6), being placed in the space (5), **characterised in that** the cleaning elements (1) comprise supporting means (7, 9) which counteract deformation of the ring (8) when the cleaning elements (1) are actuated, in particular plastic or metal supporting means, arranged in the longitudinal direction of the envelope tube (6) beside the end sides of the ring (8).

2. UV irradiation device according to Claim 1, **characterised in that** the material is a fluoroelastomer.

3. UV irradiation device according to Claim 1, **characterised in that** the ring (8) has a rectangular cross section.

4. UV irradiation device according to one of the preceding claims, **characterised in that** the supporting means (7, 9) are respectively coiled helically,
- the material having a flat rectangular cross section;
- the inner diameter of the supporting means (7, 9) in the relaxed state being less than or equal to the outer diameter of the envelope tube (6) and
- at least two screw pitches respectively being provided.

5. UV irradiation device according to one of the preceding claims, **characterised in that** the supporting means (7, 9) are made of a halogenated hydrocarbon material.

6. UV irradiation device according to one of the preceding claims, **characterised in that** the space (5) provided in the cleaning element (1) is a groove (5) with rectangular cross section formed from the inside, and **in that** packing (7, 8, 9) which comprises a supporting means (7), a ring (8) and a further supporting means (9) is placed in the groove (5).

7. UV irradiation device according to one of the preceding claims, **characterised in that** the packing (7, 8, 9) has an axial clearance of from 0 mm to 2 mm in the groove (5).

8. UV irradiation device according to one of the preceding claims, **characterised in that** the packing (7, 8, 9) has a radial clearance of from 2 mm to 8 mm in the groove (5), in particular about 5 mm.

9. UV irradiation device according to one of the preceding claims, **characterised in that** the ring (8) has a thickness of from 0.5 mm to 2 mm, in particular 0.8 mm.

10. UV irradiation device according to one of the preceding claims, **characterised in that** the material of the ring (8) has a radial width of from 5 mm to 15 mm, in particular about 11 mm.

## Revendications

1. Dispositif d'irradiation aux UV pour le traitement de fluides, en particulier d'eau ou d'eaux usées,
- avec un nombre d'unités de lampes qui comprennent chacune une source de rayonnement et un tube de gainage entourant la source de rayonnement, les unités de lampe étant formées sensiblement de manière cylindrique,
- avec un dispositif de nettoyage qui comporte des éléments de nettoyage (1) entourant annulairement les tubes de gainage (6), à chaque tube (6) étant affecté au moins un élément de nettoyage (1) et les éléments de nettoyage (1) étant décalables par au moins une unité d'entraînement dans la direction longitudinale des tubes de gainage (6), sachant que
- les éléments de nettoyage comportent un espace annulaire (5) limité axialement, qui est ouvert en direction de la surface des tubes de gainage (6), au moins un anneau (8), en matériau élastique à la manière du caoutchouc, avec une section non circulaire, dont le diamètre intérieur à l'état détendu est plus petit ou égal au diamètre extérieur du tube de gainage (6), se trouvant dans l'espace (5),
**caractérisé en ce que** les éléments de nettoyage (1) comportent dans la direction longitudinale du tube de gainage (6) des éléments de soutien (7, 9) disposés à côté des faces frontales de l'anneau (8), en particulier des éléments de soutien en matière synthétique ou en métal, qui agissent à l'encontre d'une déformation de l'anneau (8) lors de l'actionnement des éléments de nettoyage (1).

2. Dispositif d'irradiation aux UV selon la revendication 1, **caractérisé en ce que** le matériau est un fluoroélastomère.

3. Dispositif d'irradiation aux UV selon la revendication 1, **caractérisé en ce que** l'anneau (8) présente une section rectangulaire.

4. Dispositif d'irradiation aux UV selon l'une des revendications précédentes, **caractérisé en ce que** les éléments de soutien (7, 9) sont cintrés chacun en forme d'hélicoïde,
- le matériau présentant une section rectangulaire plate ;
- dans l'état détendu, le diamètre intérieur du moyen de soutien (7, 9) étant plus petit ou égal au diamètre extérieur du tube de gainage (6) et
- au moins deux filets d'hélicoïde étant respectivement prévus.

5. Dispositif d'irradiation aux UV selon l'une des revendications précédentes, **caractérisé en ce que** les éléments de soutien (7, 9) sont réalisés en un matériau d'hydrocarbure halogéné.

6. Dispositif d'irradiation aux UV selon l'une des revendications précédentes, **caractérisé en ce que** l'espace (5) prévu dans l'élément de nettoyage (1) est une gorge (5) de section rectangulaire taillée de l'intérieur et **en ce que** dans la gorge (5) se trouve une garniture (7, 8, 9) présentant un moyen de soutien (7), un anneau (8) et un autre moyen de soutien (9).

7. Dispositif d'irradiation aux UV selon l'une des revendications précédentes, **caractérisé en ce que** la garniture (7, 8, 9) présente un jeu axial de 0 mm à 2 mm dans la gorge (5).

8. Dispositif d'irradiation aux UV selon l'une des revendications précédentes, **caractérisé en ce que** la garniture (7, 8, 9) présente un jeu radial de 2 mm à 8 mm, en particulier d'environ 5 mm, dans la gorge (5).

9. Dispositif d'irradiation aux UV selon l'une des revendications précédentes, **caractérisé en ce que** l'anneau (8) présente une épaisseur de 0,5 mm à 2 mm, en particulier de 0,8 mm.

10. Dispositif d'irradiation aux UV selon l'une des revendications précédentes, **caractérisé en ce que** le matériau de l'anneau (8) présente une largeur radiale de 5 mm à 15 mm, en particulier d'environ 11 mm.
